# EUROPEAN PATENT APPLICATION

(11) **EP 4 610 515 A1**
(43) Date of publication of application: **03.09.2025**
(21) Application number: 25161395.6
(22) Date of filing: 03.03.2025
(51) Int. Cl.: F16G 11/14, F16G 11/02, B63B 21/04

(54) **TERMINAL FOR WIRES MADE OF TEXTILE FIBRE**

(30) Priority: 01.03.2024 IT 202400004612
(71) Applicant: Armare S.r.l., 33058 San Giorgio di Nogaro (UD) (IT)
(72) Inventor: FINCO, Stefano, I-33050 PORPETTO (UD) (IT); ILLESI HEE SEUNG, Matteo, I-36042 Breganze (VI) (IT)
(74) Representative: Cantaluppi, Stefano

(57) **Abstract**

Terminal (3) for wires (1) made of textile fibre, comprising a thimble (4; 204) for fixedly joining to the wire (1) and a connector (5; 205) which can be fixedly joined to the thimble (4; 204) by way of respective engaging means and counter-means, the engaging means and counter-means comprising at least one respective form-fitting interlocking connection of the tenon and mortise type between the thimble (4; 204) and the connector (5; 205), wherein the thimble (4; 204) comprises opposite faces (7), each one comprising a mortise type formation (10) and a tenon type formation (9, 20) which are adjacent, the connector (5) comprises walls (15) which are opposite and the mutually facing surfaces of which each comprise a respective second tenon type formation (16, 17) and a respective second mortise type formation (16a, 19) which are adjacent, corresponding tenon type formations (9, 20) and mortise type formations (10) of the thimble (4) being suitable for mutual connection to the respective second mortise type formations (16a, 19) and the respective second tenon type formations (16, 17) of the connector (5).

## Description

The present invention relates to a terminal for wires made of textile fibre, of the type including the features mentioned in the preamble of the main claim.

Such terminals are normally applied to the opposite ends of the wires made of special textile fibres (so-called exotic fibres at least in the nautical field) which are used in place of metal wires for constructing the rigging (stays, shrouds and backstays, anti-torsion wires) in sailing boats. Such fibres comprise by way of non-limiting example carbon fibres, high-modulus polyethylene fibres (HMPE), aramid fibres, zylon fibres (PBO) and liquid crystal polymer fibres (LCP) which are commercially known by the trade name Vectran.

The terminals generally comprise a first portion (thimble) which is received in an eyelet or annular splicing of the wire and a second portion (connector) which is connected to the thimble and which is suitable for being secured to the equipment item to which the wire is fixed. Typically, the connector comprises to this end a threaded element.

Normally, the thimble is of flattened ovoid shape and is surrounded by a receiving channel for the wire to be terminated. Near one end of the thimble, there is formed a hole for a pin which, with the terminal being assembled, passes through another hole of the connector. The pin which is fitted in the holes of the thimble and the connector acts as a structural connection between the two terminal portions.

A terminal for wires having this configuration has been found to be satisfactory from the mechanical point of view, but can be extensively improved in terms of compactness, lightness for the same resistance, number of components necessary and versatility when changing the threads of the connector.

The technical problem addressed by the invention is to provide a terminal for wires made of textile fibre which is structurally and functionally configured to provide at least some of the improvements set out above.

In the context of this problem, a main object of the invention is to provide a terminal which is extremely versatile and compact.

Another object of the invention is to provide a terminal for textile wires which is easy to assemble, light and particularly resistant.

This problem is solved and these objects are at least partially achieved by means of a terminal including a terminal for wires made of textile fibre, particularly conceived for nautical wires made of exotic fibres, comprising a thimble for fixedly joining to the wire and a connector which can be fixedly joined to the thimble by way of respective engaging means and counter-means. Preferably, the engaging means and counter-means comprise at least one respective form-fitting connection between the thimble and the connector.

In a preferred solution, the interlocking joint is a mortise and tenon joint. A form-fitting connection with a substantial surface is thereby used, thereby increasing the traction resistance of the terminal.

In this manner, and in particular when the form-fitting connection is an interlocking joint, there is eliminated the pin with which the thimble is engaged with the connector, obtaining a lighter assembly which is generally more compact.

In one embodiment of the invention, the thimble comprises two opposite faces, in each of which there is formed at least one of the respective engaging means and counter-means, the connector preferably comprises two walls which are opposite and spaced apart by an extent so as to receive with form-fitting connection the thimble. Preferably, there is formed in the walls at least another of the respective engaging means and counter-means with such an arrangement that the engaging means and counter-means are connected to each other in an interlocking manner when the thimble is inserted between the walls of the connector.

Preferably, the engaging means and counter-means comprise at least a mortise which is formed on each face of the thimble and at least a corresponding tenon which is formed on each wall of the connector.

Preferably, the thimble comprises opposite faces, each comprising a mortise type formation and a tenon type formation which are adjacent.

Preferably, the connector comprises opposite walls, the mutually facing surfaces of which each comprise a respective second tenon type formation and a respective mortise type formation.

Preferably, the corresponding tenon and mortise type formations of the thimble are suitable for mutual connection to the respective second mortise type formations and second tenon type formations of the connector.

Preferably, the mortise is recessed in the corresponding face of the thimble and the tenon is in relief on the corresponding wall of the connector. Advantageously, the presence of a respective tenon and mortise type formation both in the thimble and in the connector allows the construction of a double form-fitting connection in the terminal, thereby increasing the stability and reliability of the connection between the thimble and connector.

According to an embodiment of the invention, the interlocking joint is for insertion in a transverse direction relative to an axis of the terminal. By using a tenon/mortise connection with insertion in the direction transverse to the axis of the terminal, the traction resistance is improved and the connection between the two portions of the terminal is advantageously facilitated.

This feature allows the ready insertion of the thimble in the connector.

According to an embodiment of the invention, the faces of the thimble are tapered and suitable for being received with form-fitting connection between corresponding walls of the connector. This feature allows a reliable and resistant form-fitting connection to be obtained between the thimble and connector. According to an embodiment of the invention, the connector comprises a threaded hole provided in an axial direction relative to the terminal. This feature allows a wire to be engaged with the connector, thereby urging both the terminal and the wire connected thereto by traction along the axis, maximizing the resistance thereof to this type of force.

Preferably, each tenon type formation of the thimble has a profile which is tapered in the opposite direction with respect to the mortise type formation, more preferably the profile has a wedge-like form. This feature improves the form-fitting connection between the thimble and connector.

According to a number of embodiments, the faces of the thimble are opposite a channel. This feature allows an eyelet of a wire to be received between the faces of the thimble.

Preferably, the engaging means and counter-means comprise a tooth-like formation and a receiving formation, respectively.

According to a number of embodiments, each face of the thimble comprises a tooth-like formation. Preferably, each wall of the connector comprises a receiving formation. Preferably, corresponding receiving formations and tooth-like formations are suitable for mutual connection, preferably of the interlocking type and more preferably of the mortise and tenon type.

These features allow an additional form-fitting connection to be obtained between the thimble and the connector, making the mechanical connection between the thimble and connector more stable, resistant and reliable. Furthermore, these features increase the mechanical cohesion of the terminal. Preferably, the form-fitting connections, particularly between the tooth-like formation and receiving formation, between the thimble and connector are interlocking for insertion in the direction transverse to the axis of the terminal. Preferably, the form-fitting connections between the thimble and connector are interlocking for insertion in the direction orthogonal to the axis of the terminal. These features allow the thimble to be readily connected to the connector and at the same time prevent them from becoming separated during use of the terminal, for example, when it is loaded by traction.

According to a number of embodiments of the invention, the tooth-like formation comprises a pair of teeth. Preferably, the receiving formation comprises a pair of housings. Preferably, each tooth and each respective housing are suitable for mutual connection, preferably interlocking connection and more preferably of the mortise and tenon type.

According to an embodiment of the invention, the receiving formation comprises a respective counter-tooth, which is preferably arranged at the end of each respective tooth.

These features confer additional reliability on the connection between the thimble and the connector, preventing the tooth from leaving the respective housing.

According to a number of embodiments of the invention, each tenon type formation and each tooth formation of the respective face are opposite with respect to the respective mortise type formation of the face.

Preferably, each second mortise type formation and each receiving formation of the respective wall are opposite each other with respect to the respective second tenon type formation of the wall.

These features allow a distribution in the thimble and connector of the respective tenon type formations and the respective mortise type formations so as to obtain a uniform distribution of the stresses in the terminal, thereby preventing breaks as a result of localized forces.

According to a number of embodiments, each tooth-like formation comprises a discharge. Preferably, each receiving formation comprises a second discharge. Preferably, the discharge and second discharge are aligned when they are connected. Preferably, each discharge is curvilinear. Preferably, each discharge is developed between the teeth of the tooth-like formation and/or between the housings of the receiving formation, respectively. Preferably, each discharge has a semi-cylindrical formation.

Preferably, there are two faces of the thimble. Preferably, there are two walls of the connector.

According to an embodiment of the invention, each mortise type formation of the thimble is a tapered recess. Preferably, the second tenon type formation of the connector is formed with a wedge-like profile which is suitable for connection to the mortise type formation of the thimble.

Preferably, each second mortise type formation of the connector is a recess with a substantially trapezoidal profile. Preferably, each tenon type formation of the thimble has a projecting profile, preferably with a trapezoidal profile, from one end of the mortise type formation of the thimble and is suitable for form-fitting connection to the respective second mortise type formation of the connector. Advantageously, these features allow a terminal which is mechanically resistant and more compact to be obtained, thereby reducing the dimensions of the terminal.

According to an embodiment of the invention, each face of the thimble comprises a respective peg and a respective head. Such features allow a respective eyelet to be engaged with a corresponding peg of the thimble. Preferably, each head is received at a free end of the respective peg. Preferably, the thimble comprises an identical number of faces, and respective pegs which support the heads. Preferably, the pegs and/or the heads are regularly angularly spaced apart, more preferably at an angle of 360 divided by the number of heads. Preferably, there are three pegs and heads. Preferably, each head comprises a channel which is formed so as to be able to engage with a portion of the respective wall and/or the extension piece of the connector.

According to an embodiment of the invention, each wall of the connector comprises extension pieces which are formed to receive with form-fitting engagement the heads of the thimble. Preferably, the extension pieces and/or the walls are spaced apart from each other by recesses which are formed and sized to receive the heads of the thimble.

These features allow a terminal which is mechanically stable, reliable and compact to be constructed for wires. Particularly, the housing of the thimble between the walls of the connector allows the longitudinal development, that is to say, along the axis, of the terminal to be reduced.

Preferably, the interlocking between the thimble and connector is for insertion by means of rotation about the axis of the terminal. This feature allows the thimble to be connected to the connector readily and stably.

Preferably, the number of connection pieces and/or walls and the relevant recesses is identical, more preferably there are three of them, and they are preferably spaced apart by an angle equal to 360 divided by the number of extension pieces or walls. These features allow the pegs of the thimble to be received inside the recesses of the connector and the thimble and the connector to be connected by rotating them with respect to each other.

Preferably, the extension pieces and/or the walls comprise projections which are formed on the mutually facing surfaces of the extension pieces and/or the walls in order to engage with the respective head in an interlocking manner. Preferably, each extension piece or wall comprises a first projection at a free end thereof and a second projection beside it. Preferably, the second mortise type formation of the connector is formed between the first projection and the second projection. Advantageously, the interlocking of the thimble in the connector is brought about between each head which is inserted with form-fitting connection in the second mortise type formation which is formed between the first projection and the second projection of the connector.

Preferably, each first projection and each second projection engage with form-fitting connection with the respective head, receiving it in the second mortise type formation so that the channel faces the first projection.

Preferably, the walls and/or extension pieces of the connector are mutually facing, preferably in such a manner that the projections are directed towards a wall or an opposite extension piece with respect to the axis of the terminal.

Preferably, the thimble comprises a central member, on which the respective faces are received.

The features and advantages of the invention will be better appreciated from the following detailed description of a preferred embodiment thereof which is illustrated by way of non-limiting example with reference to the appended drawings, in which:
- Figure 1 is a schematic, perspective view of a textile wire which is assembled with a terminal according to the invention;
- Figure 2 is a perspective view of a detail of the same wire;
- Figure 3 is a perspective view with detached portions of the components of the terminal of the preceding Figures;
- Figures 4 to 6 are perspective side views of a first construction variant of the terminal of this invention, respectively;
- Figures 7 and 8 are schematic, perspective views of a wire which is assembled with the terminal of Figures 4 to 6 with detached portions of a second construction variant of the invention;
- Figure 9 is a perspective view with detached portions of a second construction variant of the terminal of this invention;
- Figures 10 and 11 are perspective views of the terminal of Figure 9 in the assembly phase;
- Figures 12 and 13 are schematic views of the wire mounted with this terminal;
- Figure 14 is a perspective, axially sectioned view of a detail of the terminal of the preceding Figures.

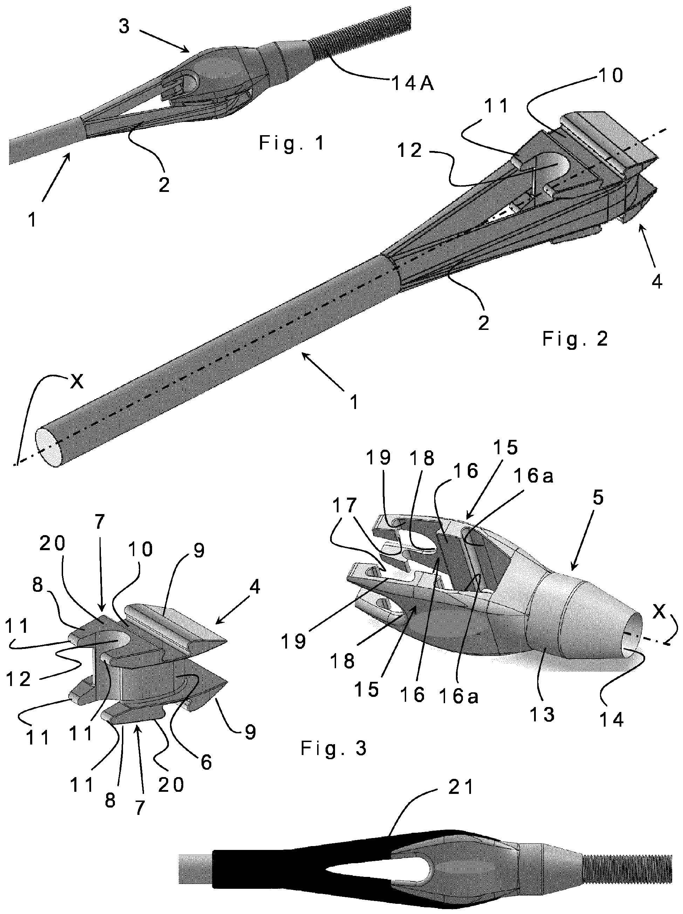

In Figures 1 to 3, there is generally designated 1 a wire which is made of textile fibres and which is provided at an end thereof with an eyelet or annular splicing 2. There is generally designated 3 a terminal for the wire 1 including a thimble 4 and a connector 5. The axis of the terminal 3 is intended to be the one indicated by the broken line X, which is coincident with the axis of the wire 1. The thimble 4 comprises a member which is preferably solid and which is surrounded over at least a main section by a channel 6 which serves to receive the eyelet 2 of the wire 1. Opposite faces of the thimble 4 with respect to the channel 6 are designated 7. The two faces 7 are preferably identical to each other and each comprise a portion 8 which is directed towards the wire 1 and a portion 9 which is opposite. The two portions 9 are preferably tapered towards each other, moving away from the portion 8 with a substantial wedge-like progression; the portions 8 preferably have parallel faces, each one preferably being terminated at the side of the wire 1 by a tooth-like formation 11. The two portions 8, 9 are separated by a mortise 10 which is recessed with respect to the faces 7 of the thimble 4 and the tooth-like formation 11 is interrupted centrally by a discharge 12 which is preferably curvilinear and even more preferably semi-cylindrical.

The connector 5 comprises an extension piece 13 with an axis X which preferably involves a hole 14, which is preferably axial and threaded and provided for receiving a portion of threaded bar 14A, with which the connector 5 can be fixed, at an anchoring location of the wire 1, on the structure to be tied. The extension piece 13 can be formed with other types of anchoring member, for example, a T-shaped head, an eye-bolt, an eyelet or the like, which are known per se in the nautical field and in connectors for anchoring wires.

The connector 5 preferably has, at the side opposite the extension piece 13, a pocket-like formation with two walls 15, the outer faces of which are preferably planar while the inner faces, which face each other, are preferably arranged with a wedge-like tapered recess 16a which is counter-formed with respect to the portion 9 of the thimble 4 in order to receive the thimble 4 with male/female form-fitting connection. Approximately halfway up the walls 15, there is present a respective tenon type formation 16. The tenon type formations 16 are in relief from the respective wall 15, one opposite the other in order to be connected in an interlocking manner with the respective mortise type formations 10 of the thimble 4.

The walls 15 are terminated at the end opposite the extension piece 13 with a respective counter-tooth 17 which is suitable for connection to the respective tooth-like formation 11 of the thimble 4. In this case, the portion of connector 5 defining the counter-tooth formation 17 is also interrupted preferably by a second semi-cylindrical discharge 18 which is conformed to the discharge 12 of the thimble 4. It will be appreciated that the portion 19 of each wall 15 contained between the respective tenon 16 and the counter-teeth 17 constitute in turn a mortise and the corresponding portion 20 of the thimble 4 which is connected at that location in an interlocking manner constitutes a corresponding tenon, thereby giving rise to an interlocking connection with a double tenon 20 and double mortise 19.

In order to apply the terminal 3 to the wire 1, initially the thimble 4 is inserted in the eyelet 2. Preferably, the wire 1 itself is constructed with a single filament or multiple filaments wound continuously between two thimbles 4 which are spaced apart from each other, repeating the windings until constituting the grouping of wires desired and therefore the correct section of the wire 1.

This operation being finished, the connector 5 is connected to the thimble 4 in order to slide in the transverse direction relative to the axis X of the terminal 3 until bringing the connector 5 with the walls 15 into precise form-fitting connection with the thimble 4, in particular with connection of the portions 8, 9 which constitute the tenons and the mortises of the interlocking arrangement, respectively.

Then the covering of the wire 1 is carried out, for example, with a resin or protective sheath 21 at least around the zone in which the eyelet 2 is formed.

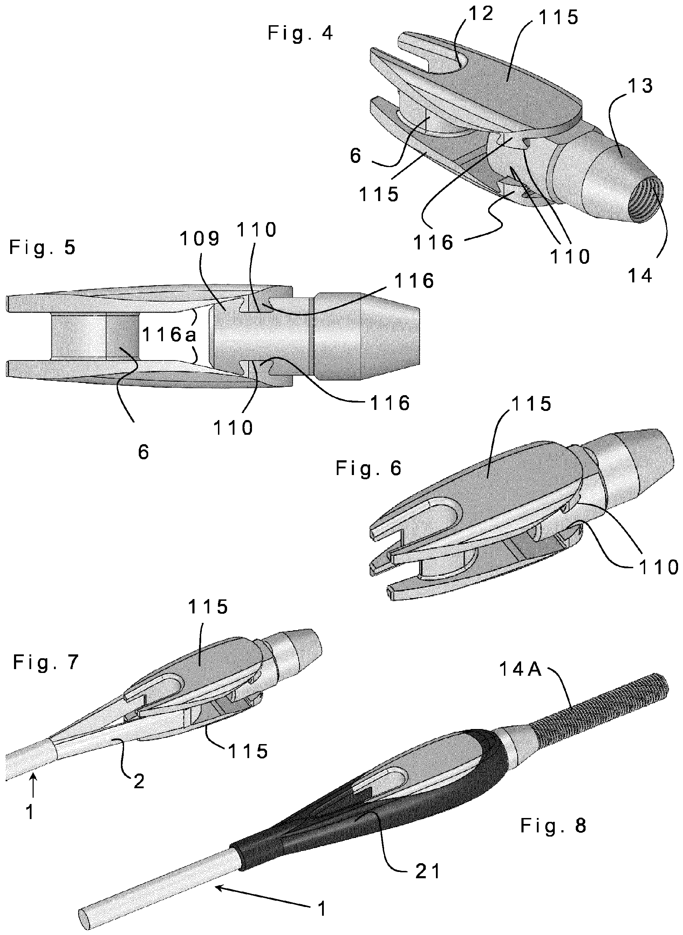

According to a first construction variant illustrated in Figures 6 and 7, the configuration is similar but substantially inverted, with the particular portions of the form-fitting connection between the thimble 4 and connector 5 of the thimble 4 in the preceding example this time being formed on the connector 5, and vice versa.

Similar or technically equivalent details are denoted by the same reference numerals increased, where differences exist, by the number 100.

The thimble is in this case provided with two walls 115 which have respective tenon type formations 116 and a tapered recess 116a. Equally, the connector 5 is provided in this case with a mortise type formation 110 and a wedge-shaped profile 109 which is capable of being connected in the recess 116a.

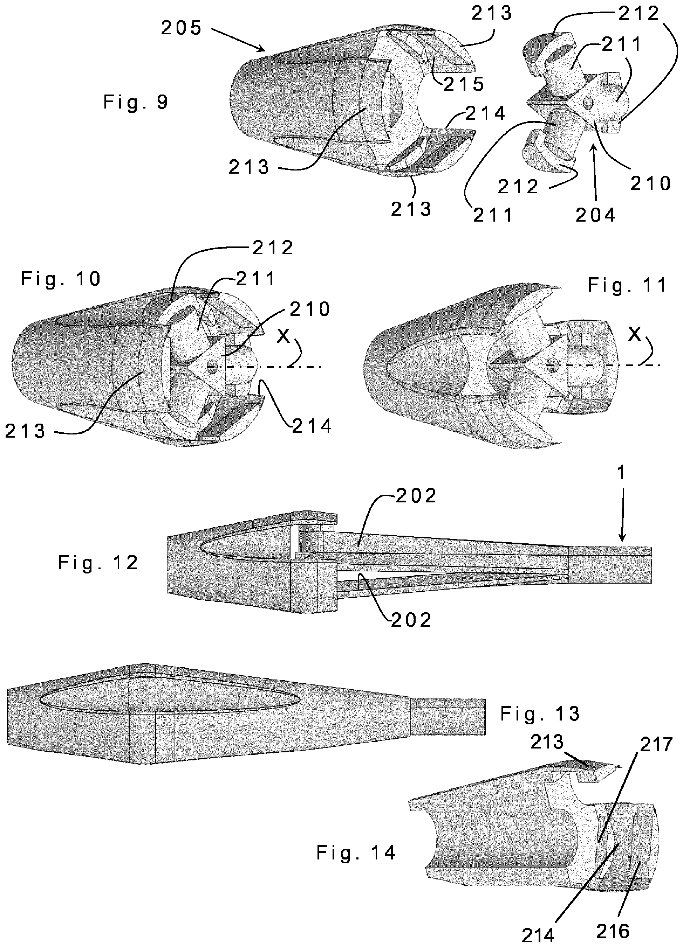

A second construction variant of the invention is illustrated in Figures 9 to 14. Similar or technically equivalent details are denoted by the same reference numerals increased, where differences exist, by the number 200.

The thimble 204 and connector 205 are in this case of the multiple type or provided to be adapted to the terminal 3 with a wire 1 with several terminations which in the example set out are formed by three eyelets all designated 202. The thimble 204 is provided in this case with a central member 210 which is, for example, polyhedral and on the faces of which there are fixed respective pegs 211 which terminate with respective heads 212 which are angularly spaced apart in a regular manner, in this instance by 120°. The connector 205 is in turn provided with three extension pieces 213 which are preferably axial and spaced apart by recesses 214 which are formed and sized so as to allow the respective heads 212 to be received.

There are formed in the mutually facing surfaces of the extension pieces 213 respective mortise type formations 215 which are delimited between opposite projections 216, 217. The mortise type formations 215 are provided to receive in an interlocking manner with form-fitting connection the heads 212 when the thimble 204 is rotated about the axis X after being inserted in the connector 205 with the heads received in the recesses 214.

In this case, therefore, a tenon and mortise type connection is also formed between the thimble 204 and the connector 205.

The invention thereby solves the problem set out and at the same time achieves a number of advantages, including a light and compact formation, with reduced dimensions, an ease and versatility of assembly (sufficient to change the type of attachment of the extension piece 13 of the connector) and a substantial robustness, particularly with respect to the axial traction forces which are the ones to which the terminal 3 is normally subjected during the working phase.

## Claims

1. Terminal (3) for wires (1) made of textile fibre, comprising a thimble (4; 204) for fixedly joining to the wire (1) and a connector (5; 205) which can be fixedly joined to the thimble (4; 204) by way of respective engaging means and counter-means, the engaging means and counter-means comprising at least one respective form-fitting interlocking connection of the tenon and mortise type between the thimble (4; 204) and the connector (5; 205), wherein the thimble (4; 204) comprises opposite faces (7), each one comprising a mortise type formation (10) and a tenon type formation (9, 20) which are adjacent, the connector (5) comprises walls (15) which are opposite and the mutually facing surfaces of which each comprise a respective second tenon type formation (16, 17) and a respective second mortise type formation (16a, 19) which are adjacent, corresponding tenon type formations (9, 20) and mortise type formations (10) of the thimble (4) being suitable for mutual connection to the respective second mortise type formations (16a, 19) and the respective second tenon type formations (16, 17) of the connector (5).

2. Terminal (3) for wires (1) according to claim 1, wherein the interlocking joint is for insertion in a transverse direction relative to an axis (X) of the terminal (3).

3. Terminal (3) for wires (1) according to claim 1 or 2, wherein the thimble (4) comprises two opposite faces (7), in each of which there is formed at least one of the respective engaging means and counter-means and the connector (5) comprises two walls (15) which are opposite and spaced apart by an extent so as to receive with form-fitting connection the thimble (4) and in which there is formed at least another of the respective engaging means and counter-means with such an arrangement that the engaging means and counter-means are connected to each other in an interlocking manner when the thimble (4) is inserted between the walls (15) of the connector (5).

4. Terminal (3) for wires (1) according to claim 3, wherein the engaging means and counter-means comprise at least a mortise (10) which is formed on each face (7) of the thimble (4) and at least a corresponding tenon (16) which is formed on each wall (15) of the connector (5).

5. Terminal (3) for wires (1) according to claim 4, wherein the mortise (10) is recessed in the corresponding face (7) of the thimble (4) and the tenon (16) is in relief on the corresponding wall (15) facing the connector (5).

6. Terminal (3) for wires (1) according to one or more of the preceding claims, wherein the thimble (4) comprises two tapered faces (9) which are suitable for being received with form-fitting connection between corresponding walls (16a) of the connector (5) or vice versa.

7. Terminal (3) for wires (1) according to one or more of the preceding claims, wherein the connector (5) comprises a threaded hole (14) which is provided in an axial direction (X) of the terminal (3).

8. Terminal (3) for wires (1) according to one or more of the preceding claims, wherein the faces (7) of the thimble (4) are opposite with respect to a channel (6).

9. Terminal (3) for wires (1) according to one or more of the preceding claims, wherein each face (7) of the thimble (4) comprises a tooth-like formation (11), each wall (15) of the connector (5) comprising a receiving formation (19), corresponding tooth-like formations (11) of the thimble (4) being suitable for mutual connection, preferably of the interlocking type, with respective receiving formations (19) of the connector (5).

10. Terminal (3) for wires according to claim 9, wherein each tooth-like formation (11) comprises a pair of teeth and wherein the receiving formation (19) comprises a pair of housings, the corresponding teeth of the thimble (4) being suitable for mutual connection, preferably interlocking connection, with the respective housings of the connector (5).

11. Terminal (3) for wires (1) according to either claim 9 or claim 10, wherein each receiving formation (19) comprises a respective counter-tooth (17).

12. Terminal (3) for wires (1) according to one or more of claims 9 to 11, wherein each tenon type formation (9) and each tooth-like formation (11) of the respective face (7) are mutually opposite with respect to the respective mortise type formation (10) of the face (7).

13. Terminal (3) for wires (1) according to any one of the preceding claims when dependent on claim 9, wherein each second mortise type formation (16a) and each receiving formation (19) of the respective wall (15) are mutually opposite with respect to the respective second tenon type formation (16) of the wall (15).

14. Terminal (3) for wires (1) according to any one of claims 1 to 4, wherein each mortise type formation (116a) of the thimble (4) is formed with a tapered recess, the second tenon type formation (109) being formed with a wedge-like profile which is suitable for connection to the mortise type formation (116a) of the thimble (4).

15. Terminal (3) for wires (1) according to claims 1, 3 or 4, wherein each face of the thimble comprises a respective peg (211) and a respective head (212), each wall (213) of the connector (205) comprises:
- a relevant recess (214) which is formed to receive the respective head (212);
- opposite projections (216, 217) which are formed on mutually facing surfaces of each wall (213) in order to engage in an interlocking manner with the respective head (212).
